# EUROPEAN PATENT APPLICATION

(11) **EP 2 487 084 A1**
(43) Date of publication of application: **15.08.2012**
(21) Application number: 11380008.0
(22) Date of filing: 09.02.2011
(51) Int. Cl.: B60T 13/08, B62D 53/06, B62D 53/08

(54) **A system for coupling semi-trailers to C1 class tractor vehicles**

(71) Applicant: Grau Maquinaria i Servei Integral, S.A., 08400 Granollers Barcelona (ES)
(72) Inventor: Grau Codony, Joan, 08400 Granollers ( Barcelona) (ES)
(74) Representative: Espiell Volart, Eduardo Maria

(57) **Abstract**

The coupling system consists of a stub -1- called a "king pin", with its support -2-, fixed to an inertia brake -3- disposed at the end of a tow bar - 4-, the rear end of which is fixed, in turn, to a support called a "gooseneck" -5-, which is fixed to a semi-trailer -6-, said assembly being completed by a parking brake -7- fixed to the side or on top of the tow bar -4-. As the "king pin" stub -1- approaches it is immediately fixed in a central recess -9- in the "fifth wheel" -10-, disposed at the rear of the tractor vehicle chassis - 8-, enabling fast uncoupling for interchanging the semi-trailer -6-.

## Description

The object of the present patent of invention is a system for coupling semi-trailers to tractor-type vehicles, specifically those having a maximum authorised mass (MAM) of less than 4,250 kg, the characteristics of which are described below.

The coupling system object of the present invention allows the semi-trailer on which it is installed to be easily and quickly coupled to the tractor-type vehicle, preferably electric, the chassis of which has been adapted for disposing the so-called "fifth wheel", said vehicle having dimensions that will allow use thereof in places with low height clearances, as well as allowing it to be driven by a person holding a B-type driver's licence.

The coupling, strictly speaking, is installed on the semi-trailer, enabling fast and permanent fixation to the standardised "fifth wheel", installed on the tractor with a MAM of less 4,250 kg. In this manner, a wide range of semi-trailers can be used, each adapted for a specific purpose and use, which can be quickly interchanged, with the consequent increase in performance.

This coupling consists of a stub, known as a "king pin", which is introduced into the "fifth wheel" and secured therein by means of an adequate fixing mechanism.

The rest of the coupling assembly, fixed to the semi-trailer, consists of a gooseneck and a tow bar, solidarily fixed by one of its sides to the gooseneck and by the other to the inertia brake. The inertia brake is solidarily fixed by one end to the gooseneck and, by the other, to the assembly that supports the "king pin" stub, said mechanism being completed by a parking brake disposed on one of the sides or on top of the tow bar.

### STATE OF THE ART

At present, coupling of semi-trailers is carried out using the well-known and standardised "fifth wheel", although this system has not been used to date for vehicles or trailers with small dimensions and capacity (MAM < 4,250 kg).

Normal trailers, while having small dimensions and capacity, are generally coupled by means of articulated or non-articulated bars with the necessary fixing pins, complemented by safety chains or by means of the classic ball coupler. Said systems do not allow the fast fixation or versatility represented by the easy interchange of semi-trailers for different uses.

### DESCRIPTION OF THE INVENTION

In accordance with that expounded in a preceding paragraph, the coupling system object of the present patent is disposed on the semi-trailer and is based on elements already standardised for tractors having a much greater MAM (such as the "king pin" stub device), together with the novel assembly, strictly speaking, of the coupling mentioned earlier: the gooseneck, tow bar, inertia brake, parking brake and "king pin" stub support itself.

This system allows fast interchange of semi-trailers according to the work to be carried out; it also allows distribution of the load of the semi-trailer at the rear of the tractor vehicle, with the consequent advantages of stability and impact of the load on the different axles; it offers high manoeuvrability, given the type of fixation to the "fifth wheel", all complemented by the preferential use of non-contaminating electric tractor vehicles and the existence of an inertia brake built into the coupling, thereby ensuring total security.

With the object of completing the foregoing, a set of drawings are attached wherein, by way of non-limiting example, a practical embodiment of the coupling system object of this invention has been represented, including the designs of different types of semi-trailers whereto this coupling system has been adapted.

In said drawings,

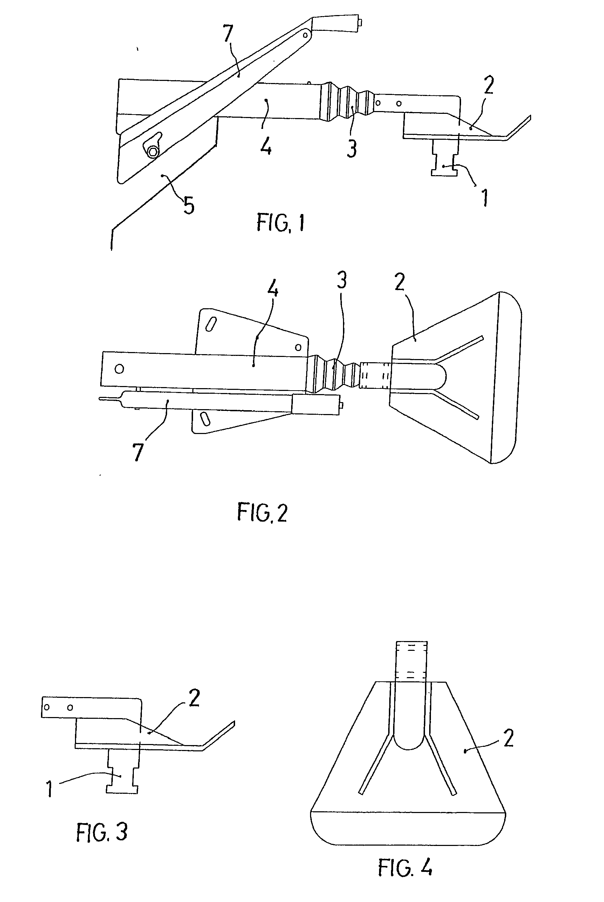

- Fig. 1: shows a schematic elevational view of the coupling assembly, according to the described system;
- Fig. 2: shows a plan view of the coupling assembly of the preceding figure;
- Fig. 3: shows an elevational view of the "king pin" stub, with its support;
- Fig. 4: shows a plan view corresponding to the preceding figure; and

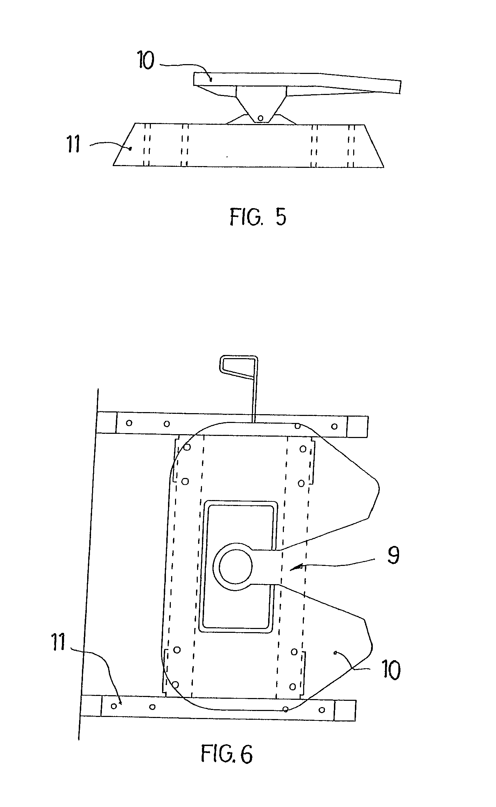

- Fig. 5: shows an elevational view of the element known as the "fifth wheel", shown only by way of illustration and to complement the foregoing;
- Fig. 6: finally, shows a plan view corresponding to the preceding figure; and
- Figs. 7 to 22: show, in the manner of practical variants of embodiment, two tractor options and fourteen different types of semi-trailers, intended for application of the coupling system object of the present invention.

In accordance with the preceding drawings, the system for coupling semi-trailers to C1 class tractor vehicles object of the present invention consists of a mechanism consisting of a stub or "king pin" -1-, having an adequate support -2-, which is supported, in turn, by an inertia brake -3-. Said inertia brake -3- is disposed at the end of a tow bar -4-, the rear end of which is fixed to a support called a "gooseneck" -5- which is fixed, in turn, to a semi-trailer -6- appropriate to the user's needs.

Finally, the assembly is completed with a parking brake -7- disposed on one side or on top of the tow bar -4-.

This assembly, disposed at the front end of the semi-trailer -6-, allows fast and easy coupling to the rear of the tractor vehicle -8-, specifically in a central recess -9- of the so-called "fifth wheel" -10-, which is fixed to the chassis of the tractor-vehicle -8- by means of its support -11-. The coupling stub or "king pin" -1- is introduced into said central recess -9-, in such a manner that coupling can be carried out even if the semi-trailer -6- is not aligned with the tractor vehicle -8-, within a radius of 180°, which is a significant advantage.

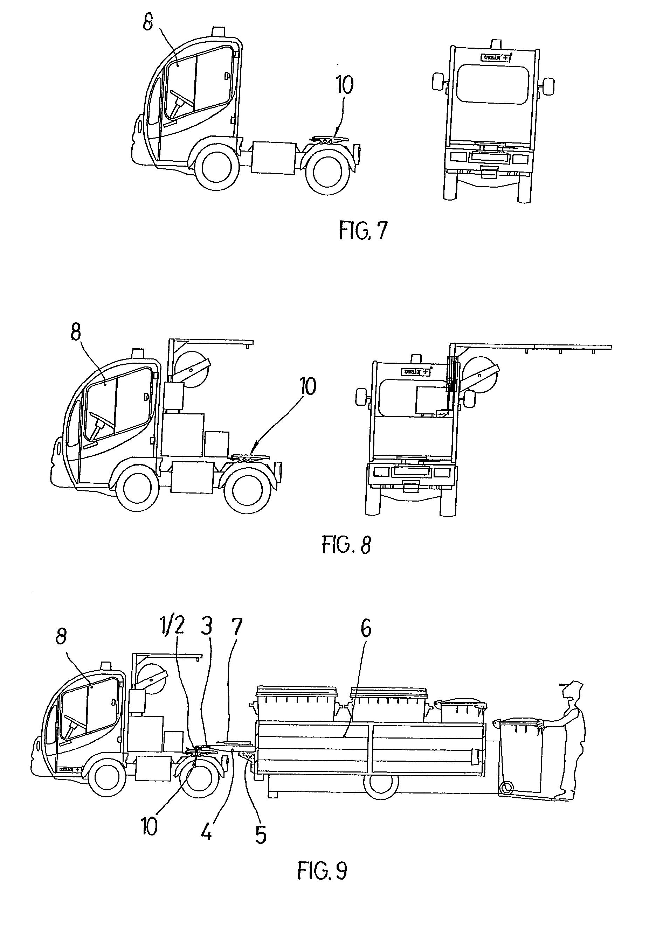

By way of practical application, mention must be made of the different variants of tractors and semi-trailers represented, by way of example, in figures 7 to 22: an electric tractor equipped with a "fifth wheel" integrated in its standard model (fig. 7); an electric tractor equipped with a "fifth wheel" and a high-pressure water unit incorporated between the "fifth wheel" and the cabin (fig. 8);

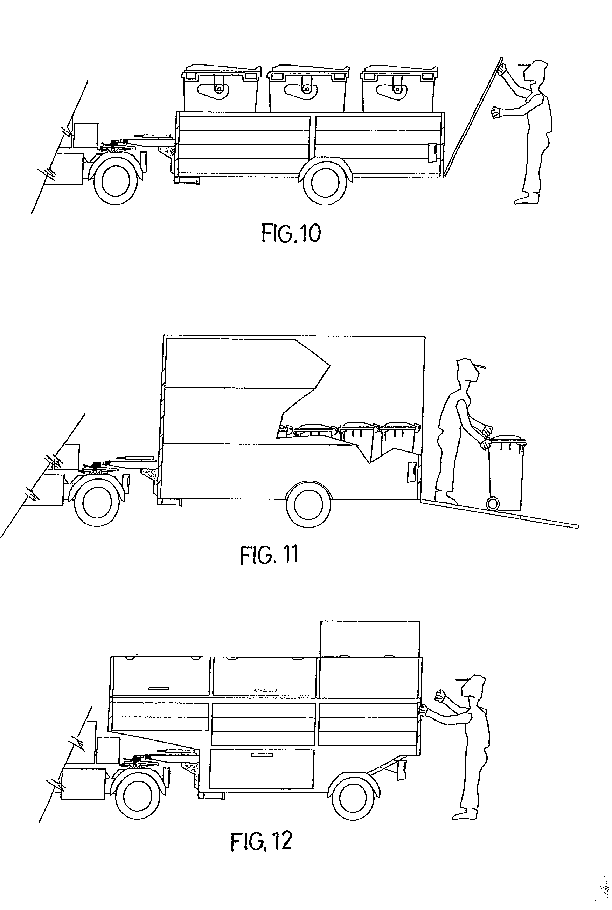

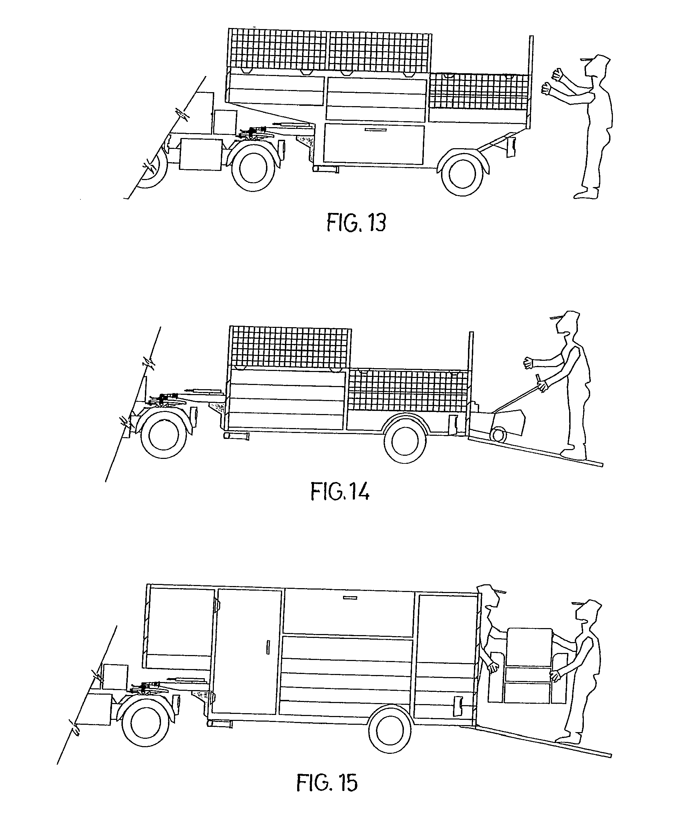

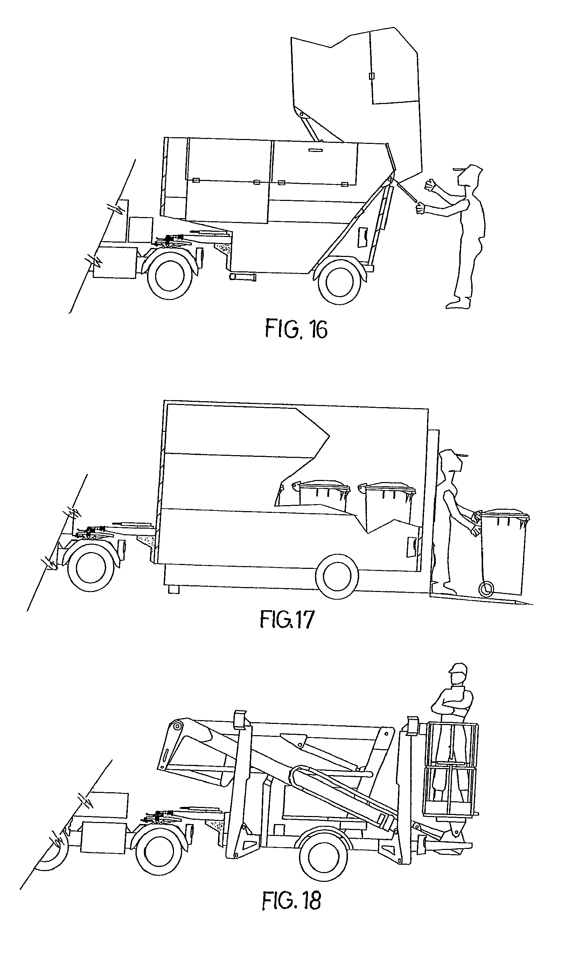

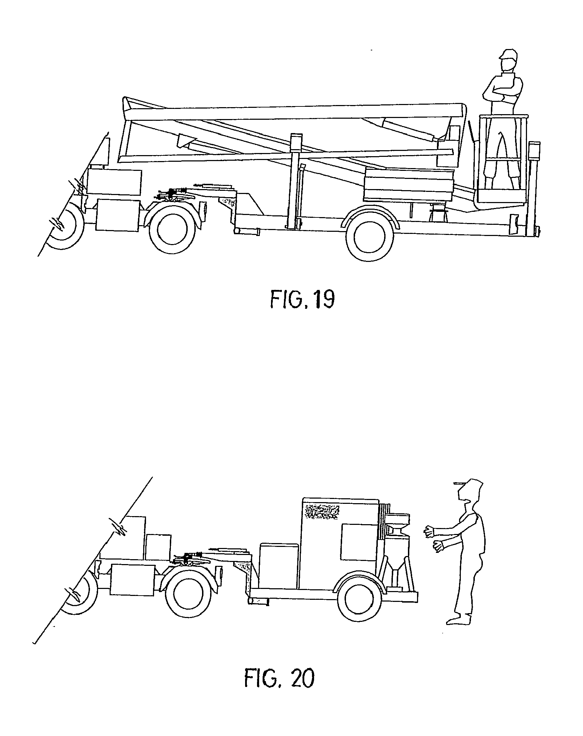

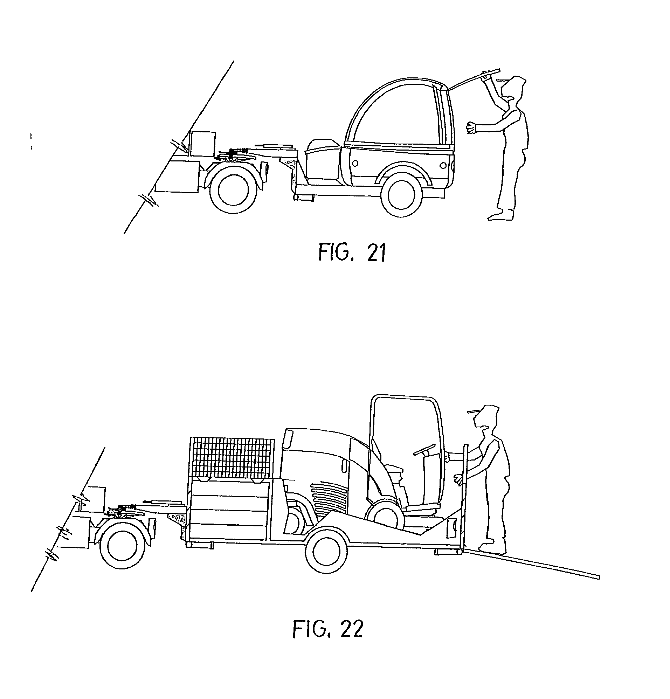

A low-bed semi-trailer which can be lowered onto the ground, with a flat loading ramp for containers (fig. 9); a low-bed semi-trailer having a rear door equipped with lifting cylinders to act as a loading platform (fig. 10); a semi-trailer, covered and soundproofed, having a rear door also for loading (fig. 11); a low-bed semi-trailer having upper openings and a raised hydraulic unloading system (fig. 12); a low-bed semi-trailer open in its upper part and with an electrohydraulic dumper (fig. 13); a low-bed semi-trailer with folding upper extensions and rear loading/unloading ramp having lifting cylinders (fig. 14); a low-bed semi-trailer, with raised sides, having a low loading ramp and lifting cylinders (fig. 15); a satellite-type semi-trailer having a rear raisable and tilting hopper (fig. 16); a semi-trailer having a bed that can be lowered to the ground and covered, with a completely flat rear ramp (fig. 17), a semi-trailer having a raisable telescopic articulated arm with a platform for carrying persons (fig. 18); a semi-trailer with platform-type arm equipped with a basket for carrying persons (fig. 19); a semi-trailer equipped with an autonomous thermal unit for cleaning graffiti (fig. 20); a semi-trailer equipped with an autonomous thermal unit for hot water high-pressure cleaning (fig. 21); and, finally, a low-bed semi-trailer for transporting a pedestrian sweeper and a waste tank integrated in the sweeper-unloading trailer itself (fig. 22).

It can be easily understood that the dimensions of the assembly and the possibility of coupling under any conditions until reaching a 90° angle on either side represents a significant advantage for applying the invention in general cleaning and urban services in narrow streets, while achieving a considerable energy saving and low impact on the environment, given the electric or hybrid nature of the vehicle.

Having sufficiently described the essential characteristics of the system object of the present invention, it must be pointed out that any variation in the dimensions, shapes, finishes or types of materials used in the practical embodiment of the coupling system will not alter the essentiality of the patent, which is summarised in the claims below.

## Claims

1. A system for coupling semi-trailers to C1 class tractor vehicles, intended for enabling and facilitating fast coupling to tractor vehicles having a MAM of less than 4,250 kg, preferably electric, the chassis of which has been adapted for disposing a "fifth wheel", **characterised in that** said coupling system consists of a stub -1- called a "king pin", with its support -2-, fixed to an inertia brake -3- disposed at the end of a tow bar - 4-, the rear end of which is fixed, in turn, to a support called a "gooseneck" -5-, which is fixed to a semi-trailer -6-, said assembly being completed by a parking brake -7- fixed to one side or on top of the tow bar -4-.

2. A system for coupling semi-trailers to C1 class tractor vehicles, according to the preceding claim, which will be disposed at the front of the semi-trailer -6-, **characterised in that**, as the "king pin" stub -1- approaches, it is immediately and easily fixed in a central recess -9- in the "fifth wheel" -10- disposed at the rear of the tractor vehicle chassis -8-, thereby enabling coupling even if the semi-trailer is not perfectly aligned and, likewise, allowing fast and easy uncoupling for changing the semi-trailer -6- for another which is also equipped with the coupling system and destined for any other application or use.
